# EUROPEAN PATENT SPECIFICATION

(11) **EP 3 153 266 B1**
(45) Date of publication and mention of the grant of the patent: **01.05.2024**
(21) Application number: 16192779.3
(22) Date of filing: 07.10.2016
(51) Int. Cl.: B23D 45/12, G21D 1/00, E21B 29/00, G21F 9/34, B23D 61/02

(54) **TUBE CUTTING DEVICE HAVING CONICAL FITTING MEMBER TO CUT TUBE OF WASTE STEAM GENERATOR AND CUTTING METHOD**
ROHRSCHNEIDEVORRICHTUNG MIT KONISCHEM ANSCHLUSSELEMENT ZUM SCHNEIDEN DES ROHRS EINES ABDAMPFERZEUGERS SOWIE VERFAHREN ZUM SCHNEIDEN
DISPOSITIF DE DÉCOUPE DE TUBE AVEC ÉLÉMENT DE FIXATION CONIQUE POUR COUPE DE TUBE DE PURGE DE GÉNÉRATEUR DE VAPEUR AINSI QUE PROCÉDÉ DE COUPE

(30) Priority: 08.10.2015 KR 20150141792
(43) Date of publication of application: 12.04.2017
(73) Proprietor: Doosan Enerbility Co., Ltd., Seongsan-gu Changwon-si, Gyeongsangnam-do 51711 (KR)
(72) Inventor: Park, Kwangsoo, 51498 Gyeongsangnam-do (KR); Lee, Seonho, 54126 Gyeongsangnam-do (KR); Park, Kwangyong, 51590 Gyeongsangnam-do (KR)
(74) Representative: Ter Meer Steinmeister & Partner

(56) References cited:
- DE-U1- 20 201 201
- US-A- 512 631
- US-A- 956 805
- US-A- 2 227 348
- US-A1- 2008 092 356
- US-A1- 2010 258 293
- US-A1- 2013 233 139
- US-B1- 6 508 975

## Description

### [Technical Field]

The exemplary embodiments relates to a tube cutting device for cutting a tube of a waste steam generator, and more particularly, to a tube cutting device that is provided with a saw mounted at the interior of a small-sized tube attached to the steam generator to cut the small-sized tube at the time when the steam generator is removed from a nuclear power plant.

### [Background Art]

In the related art, a nuclear power plant is classified into a nuclear steam supply system around a nuclear reactor, a generator system like a turbine to run a generator with the steam received thereto, and other accessory facilities.

In this case, the nuclear steam supply system includes a pressurizer, a steam generator, a main coolant pump, and the nuclear reactor in which the fission of nuclear fuels is conducted.

Among them, the steam generator is configured wherein a high temperature and high pressure primary coolant, in which radioactive substances generated from the nuclear reactor are contained, flows along the inner peripheral surface of a steam generator tube, so that the cool feed water on the outside of the steam generator tube becomes heated to generate steam therefrom and to supply the generated steam to the turbine.

The steam generator tube is made of Ni-based alloy 600 or 690 having excellent corrosion resistance at a high temperature and a high pressure.

On the other hand, the primary cooling water circulating the interior of the steam generator is contaminated by heating and radioactivity, while passing through the nuclear reactor, and if the steam generator tube is broken by the high temperature and high pressure water having the radioactivity through the pressurization of the pressurizer, secondary cooling water is contaminated, thereby causing radioactivity leakage.

Accordingly, the steam generator in the nuclear power plant has a very important role as a primary protection facility through which the radioactive substances are isolated therefrom.

If the steam generator is removed or partially repaired by aging, it should be careful about the contamination by the radioactive substances.

Accordingly, the removing or repairing work has to be conducted not by a worker, but by a machine in a wired or wireless manner.

So as to disassemble the waste steam generator, while preventing the radioactive contamination substances from being diffused, the waste steam generator should be first divided into non-contamination structures and contamination structures.

The waste steam generator has complicated structures and is also contaminated by the radioactivity, and accordingly, it has to be disassembled, while giving any damage to the structures.

So as to disassemble the internal structures of the waste steam generator, first, a shell of the waste steam generator has to cut.

In case of cutting the shell in a conventional practice, the steam generator is first separated from the nuclear power plant, moves to a closed work place located at the outside of the nuclear power plant, and cuts the shell by means of thermal treatment. In the conventional shell cutting process, however, the steam generator has to be inconveniently separated from the nuclear power plant, and in this case, dust and aerosol as secondary contamination substances are generated, thereby additionally needing the treatment for the secondary contamination substances.

It is hard to cut the steam generator tube from the outer peripheral surface thereof according to the structural characteristics of the steam generator, and accordingly, there is a need for the development of a new tube cutting device capable of cutting the tube of the waste steam generator in the direction of the outside of the tube from the inside of the tube.

US 6 508 975 B1 discloses a device that includes an axial ram within a rotational cylinder which is enclosed in a housing. The housing is adapted for attachment to an open end of the pipe and for supporting the ram and cylinder in cantilever fashion within the pipe. A radially movable cutter, preferably a plasma arc torch, is attached to the distal end of the ram. A drive mechanism, containing motors and mechanical hardware for operating the ram and cylinder, is attached to the proximal end of the housing. The ram and cylinder provide for moving the cutter axially and circumferentially, and a cable assembly attached to a remote motor provide for the movement of the cutter radially, within the pipe.

US 2008/092356 A1 discloses a casing cutter comprising a body, a cutting head, cutting blades, and actuators for operating the cutting head and cutting blades. Cutting is accomplished by rotatingly actuating the cutting head with an associated motor, and then radially extending the cutting blades away from the cutting head.

US 512 631 A discloses a tube cutter usable as a device for cutting boiler tubes. The tube cutter has a shaft which is screw-threaded on one end and is provided with a hand nut. Mounted on the opposite end of the shaft from the screw threads is a conical enlargement, the small end of which is formed on or fixed to the shaft. Formed in the enlarged portion are guideways. The tube cutter includes a cylindrical casting. The end adjacent to the boiler flue is provided with an enlarged portion. The interior of the enlarged portion is conical in shape to admit the enlarged portion formed on or fixed to the shaft to be inserted therein. Mounted upon the cylindrical casting and screw threaded upon its outer periphery is a sleeve or casting; said casting is tapered so that it is somewhat larger on its outer end. Formed on the outer end of the casting is an annular flange. Formed in the outer edge of the flange are notches. Mounted on the cylindrical casting adjacent to the outer end of the casting is a handle; that portion of the handle which engages the casting is provided with a slot or opening. Mounted in the slot and connecting the casting to the handle is a ratchet-wheel and a pawl; said pawl is adapted to engage the ratchet-wheel. Mounted on the side of the handle adjacent to the casting is a bolt held in engagement with said handle by means of straps. The upper end of the bolt is provided with a projection or lift. Mounted in the bolt is a pawl which is pivoted. Directly back of said pawl adjacent to its lower end is a coiled spring for the purpose of holding the pawl in its outward position. Formed in the enlarged portion of the casting are slots or openings. Mounted in the openings are cutters; these cutters are pivoted. There are lugs formed on the inner edge of the cutters to engage the guideways in the conical or enlarged portion on the end of the shaft.

### [Disclosure]

### [Technical Problem]

Accordingly, the exemplary embodiments has been made in view of the above-mentioned problems occurring in the prior art, and it is an object of the exemplary embodiments to provide a tube cutting device having a saw and a conical fitting member to cut a tube of a waste steam generator, wherein the tube cutting device is first conveyed to a place in which the waste steam generator is installed, is insertedly put into the tube of the waste steam generator, and then cuts the tube in the direction of the outside of the tube from the inside of the tube.

It is another object of the exemplary embodiments to provide a tube cutting device for cutting a tube of a waste steam generator that is capable of conducting the cutting, while the waste steam generator is not being separated from a nuclear power plant, unlike the conventional practice, generating no dust and aerosol as secondary contamination substances therefrom, and safely protecting a worker from radioactive contamination substances not through labor force, but through mechanical work.

### [Technical Solution]

The object(s) are solved by the features of claim 1. The invention is set out by the features of claim 1.

According to a first aspect of the exemplary embodiments, there is provided a tube cutting device according to claim 1 for cutting a tube of a waste steam generator, the tube cutting device including: a body fixedly located to transmit power therefrom; a tube-shaped rotary body located on one side surface of the body and having a horizontal rotary shaft in such a manner as to rotate in a given direction with the power supplied from the body; a plurality of clamps located along the outer peripheral surface of the body side end portion of the rotary body to fix the rotary body so that the rotary body is fixed to the tube to be cut; and a saw located on the opposite end portion to the body side end portion of the rotary body in such a manner as to rotate together with the rotary body to cut the tube.

The body includes a ball screw configured to linearly drive the rotary body on the horizontal axis thereof in the interior of the tube to be cut.

According to the exemplary embodiments, desirably, the body includes any one of a clamp motor configured to drive the plurality of clamps, the clamp motor having a rotor, a stator, a ball bearing and a shaft and a clamp cylinder configured to drive the plurality of clamps, the clamp cylinder having a hydraulic cylinder.

According to the exemplary embodiments, desirably, the body includes a plurality of spur gears engaged with the clamp motor to drive the plurality of clamps.

The saw is entirely formed in a doughnut shape and includes the hollow portion formed on the center thereof and a plurality of saw blades segmented with a given size and shape.

The body includes a saw blade driving motor configured to move the plurality of segmented saw blades to the inner peripheral wall of the tube.

According to the exemplary embodiments, desirably, the tube cutting device further includes a controller configured to wiredly or wirelessly control the driving of the rotary body, the clamps and the saw.

The body may include a ball screw configured to linearly drive the rotary body on a horizontal axis of the rotary body.

The body includes a ball screw configured to drive the fitting member forwardly and backwardly along a horizontal line toward and from the hollow portion of the saw.

The fitting member has a conical shape and is disposed on an opposite side to a side of the saw facing the body, and a portion of the fitting member is configured to be inserted into the hollow portion formed on the center portion of the saw.

The body may include a clamp motor configured to drive the plurality of clamps, and the clamp motor may include: a motor rotary body; a stator; a ball bearing; and a motor shaft. The body may include a clamp cylinder configured to drive the plurality of clamps, and the clamp cylinder may include a hydraulic cylinder.

The body may further include a plurality of spur gears engaged with the clamp motor and configured to drive the plurality of clamps.

The saw is formed in a doughnut shape and includes: the hollow portion formed on the center portion thereof; and a plurality of saw blades forming the saw.

The body includes a saw blade driving motor configured to move the plurality of saw blades toward an inner peripheral wall of the tube.

The tube cutting device may further include a controller configured to wiredly or wirelessly control the driving of the rotary body, the plurality of clamps and the saw.

To accomplish the above-mentioned objects, according to an aspect of the exemplary embodiments, there is provided a tube cutting method, as defined in claim 6, for cutting a tube of a waste steam generator, the tube cutting method including: the clamping step of fixing a tube-shaped rotary body in such a manner as to be separated from a tube to be cut by a given distance by means of a plurality of clamps disposed along the outer peripheral surface of the body side end portion of the rotary body; the rotary body forward/backward driving step of linearly driving the rotary body on the horizontal axis in the interior of the tube to be cut by means of a ball screw; and the cutting step of moving a plurality of saw blades of a saw to the inner peripheral wall of the tube to cut the tube.

According to the exemplary embodiments, desirably, the clamping step includes any one of the clamping motor driving step of fixing the plurality of clamps to the rotary body in such a manner as to be separated from the tube to be cut by the given distance by means of a clamp motor and a plurality of spur gears and the clamp cylinder driving step of fixing the plurality of clamps to the rotary body in such a manner as to be separated from the tube to be cut by the given distance by means of a clamp cylinder.

According to the exemplary embodiments, desirably, the cutting step includes the saw rotating and driving step of rotating the saw in a given direction, while having the same center axis as the rotary body, and the saw blade extending step of moving the plurality of saw blades of the saw toward the inner peripheral wall of the tube.

### [Advantageous Effects]

According to the exemplary embodiments, the tube cutting device for cutting the tube of the waste steam generator is first conveyed to a place in which the waste steam generator is installed, is insertedly put into the tube of the waste steam generator, and then cuts the tube in the direction of the outside of the tube from the inside of the tube.

Further, the tube cutting device according to the exemplary embodiments is capable of conducting the cutting operation, while the waste steam generator is not being separated from a nuclear power plant, unlike the conventional practice, generating no dust and aerosol as secondary contamination substances therefrom, and safely protecting a worker from radioactive contamination substances not through labor force, but through mechanical work.

### [Description of Drawings]

FIG. 1 is a schematic perspective view showing a tube cutting device for cutting a tube of a waste steam generator according to the exemplary embodiments, wherein the tube cutting device is inserted into the tube of the waste steam generator.
FIG.2 is a side view showing the tube cutting device according to the exemplary embodiments.
FIG.3 is a perspective view showing a ball screw disposed on a body of the tube cutting device according to the exemplary embodiments.
FIG.4 is a perspective view showing a clamp motor mounted on the body of the tube cutting device according to the exemplary embodiments.
FIG.5 is a perspective view showing a clamp cylinder mounted on the body of the tube cutting device according to the exemplary embodiments.
FIG.6 is a front view showing a saw and a plurality of saw blades disposed on the end of a rotary body of the tube cutting device according to the exemplary embodiments.
FIG.7 is a side sectional view showing the saw disposed on the end of the rotary body of the tube cutting device according to the exemplary embodiments.
FIG.8 is a block diagram showing tube cutting steps of cutting a tube of a waste steam generator according to the exemplary embodiments.
FIG.9 is a block diagram showing the clamping step in the tube cutting steps for cutting the tube of the waste steam generator according to the exemplary embodiments.
FIG. 10 is a block diagram showing the cutting step in the tube cutting steps for cutting the tube of the waste steam generator according to the exemplary embodiments.

### [Mode for Invention]

Hereinafter, the inventive concept is disclosed with reference to the attached drawings wherein the corresponding parts in the exemplary embodiments are indicated by corresponding reference numerals and the repeated explanation on the corresponding parts will be avoided. If it is determined that the detailed explanation on the well known technology related to the disclosure makes the scope of the inventive concept not clear, the explanation will be avoided for the brevity of the description.

In the description, terms, such as the first, the second, A, B, (a) and (b) may be used to describe various elements, but the elements should not be restricted by the terms. The terms are used to only distinguish one element from the other element. Also, when it is said that one element is described as being "connected" or "coupled" to the other element, one element may be directly connected or coupled to the other element, but it should be understood that another element may be present between the two elements.

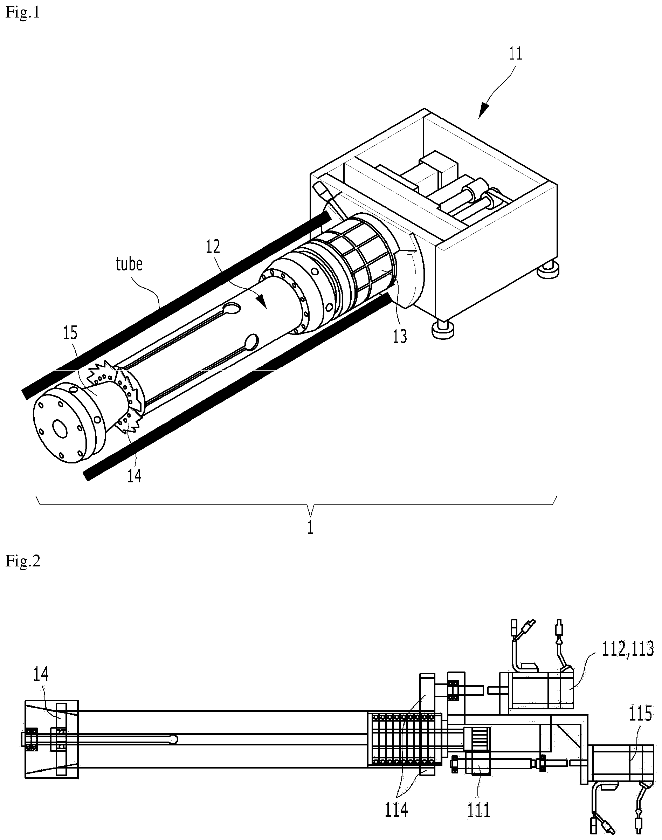

FIG. 1 is a schematic perspective view showing a tube cutting device for cutting a tube of a waste steam generator a waste steam generator according to the exemplary embodiments, wherein the tube cutting device is inserted into a tube of the waste steam generator.

FIG.2 is a side view showing the tube cutting device for cutting the tube of the waste steam generator according to the exemplary embodiments.

The disclosure is proposed to solve the above-mentioned problems occurring in the prior art, and referring to FIGS. 1 and 2, a tube cutting device 1 for cutting a tube of a waste steam generator according to the exemplary embodiments is conveyed to a place in which the waste steam generator is installed, is insertedly put into the tube of the waste steam generator, and cuts the tube in the direction of the outside of the tube from the inside of the tube by means of a saw 14.

According to the exemplary embodiments, the tube cutting device 1 includes: a body 11 fixedly located to transmit power therefrom; a tube-shaped rotary body 12 located on one side surface of the body 11 and having a horizontal rotary shaft in such a manner as to rotate in a given direction; a plurality of clamps 13 located along the outer peripheral surface of the body side end portion of the rotary body 12 to fix the rotary body 12 to the tube to be cut; and the saw 14 located on the opposite end portion to the body side end portion of the rotary body 12 in such a manner as to rotate together with the rotary body 12 to cut the tube.

According to the exemplary embodiments, on the other hand, the tube cutting device 1 includes: the body 11 fixedly located to transmit power therefrom; the tube-shaped rotary body 12 located on one side surface of the body 11 and having a horizontal rotary shaft in such a manner as to rotate in a given direction; the plurality of clamps 13 located along the outer peripheral surface of the body side end portion of the rotary body 12 to fix the rotary body 12 to the tube to be cut; the saw 14 located on the opposite end portion to the body side end portion of the rotary body 12 in such a manner as to rotate together with the rotary body 12 to cut the tube; and a fitting member 15 located on the opposite side to the body side of the saw 14 in such a manner as to be insertedly put into a hollow portion 141 formed on the center of the saw 14.

Referring to FIG.1, in more detail, the tube cutting device 1 includes the body 11 fixed to a fixing object, while a cutting operation is being conducted, and the cylindrical rotary body 12 located on one side surface of the body 11 in such a manner as to be extended to a horizontal line.

So as to cut the tube of the waste steam generator, the cylindrical rotary body 12 is inserted into the tube, and accordingly, the diameter of the cylindrical rotary body 12 is desirably not larger than that of the tube.

Further, the fitting member 15 is conical and disposed on the opposite side to the body side of the saw 14, so that a peak portion 151 of the conical fitting member 15 is inserted into the hollow portion 141 formed on the center of the saw 14.

Furthermore, the plurality of clamps 13 is disposed along the outer periphery of the body side end portion of the rotary body 12 with given sizes so as to prevent the rotary body 12 inserted into the tube from being unnecessarily moved and to allow the center axis of the tube to correspond with the center axis of the rotary body 12.

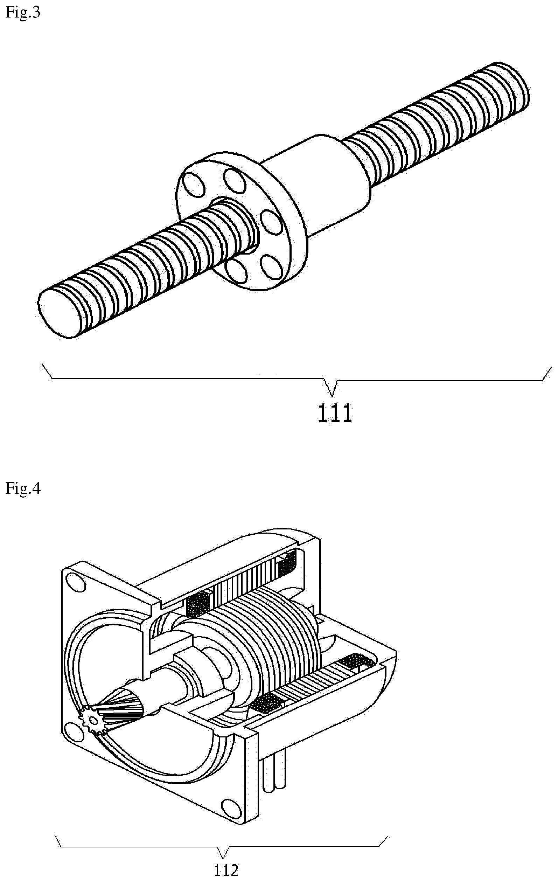

FIG.4 is a perspective view showing a clamp motor mounted on the body of the tube cutting device according to the exemplary embodiments.

Referring to FIGS.1, 2 and 4, the plurality of clamps 13 is desirably driven by means of a clamp motor 112 or a clamp cylinder 113 disposed in the body 11.

The cylindrical rotary body 12 is rigidly fixed to the interior of the tube by means of the plurality of clamps 13, and next, the doughnut-shaped saw 14 and the plurality of saw blades 142 disposed on the opposite end portion of the rotary body 12 to the body side thereof are driven by means of a saw blade driving motor 115 disposed in the interior of the body 11.

In the step of cutting the tube through the rotation of the plurality of segmented saw blades 142, further, the fitting member 15 is driven forwardly and backwardly along a horizontal line by means of a ball screw 111 so that the plurality of saw blades 142 can be moved in the direction of the outside of the tube from the inside of the tube.

In the step before the plurality of segmented saw blades 142 rotates, the fitting member 15 is driven forwardly and backwardly on the horizontal line by means of the ball screw 111 so that the fixed position of the plurality of saw blades 142 can correspond with the point at which the tube is cut.

The saw 14 and the plurality of saw blades 142 rotate in a given direction to cut the tube in the direction of the outside of the tube from the inside of the tube.

So as to cut the tube in the direction of the outside of the tube from the inside of the tube in the cutting step, further, the saw 14 and the plurality of saw blades 142 just rotate by means of the saw blade driving motor 115 or a driving motor disposed in the body 11, and in addition, the plurality of saw blades 142 can be extended toward the tube.

FIG.3 is a perspective view showing the ball screw disposed on the body of the tube cutting device according to the exemplary embodiments.

Referring to FIG.3, the body 11 has the ball screw 111 configured to allow the rotary body 12 to be linearly driven on the horizontal axis thereof in the interior of the tube to be cut.

So as to allow the tube to be cut in the direction of the outside of the tube from the inside of the tube in the cutting step, furthermore, the fitting member 15 is driven forwardly and backwardly on a horizontal line by means of the ball screw 111, so that the interval between the neighboring saw blades 142 of the saw 14 becomes increased along the sloping surface of the conical fitting member 15, thereby allowing the diameter of the saw 14 to be large.

Accordingly, the saw 14 and the plurality of saw blades 142 just rotate, and in addition, the segmented saw blades 142 are extendable toward the tube.

To do this, the body 11 includes the ball screw 111 configured to allow the fitting member 15 to be driven forwardly and backwardly on the horizontal line toward and from the hollow portion 141 of the saw 14.

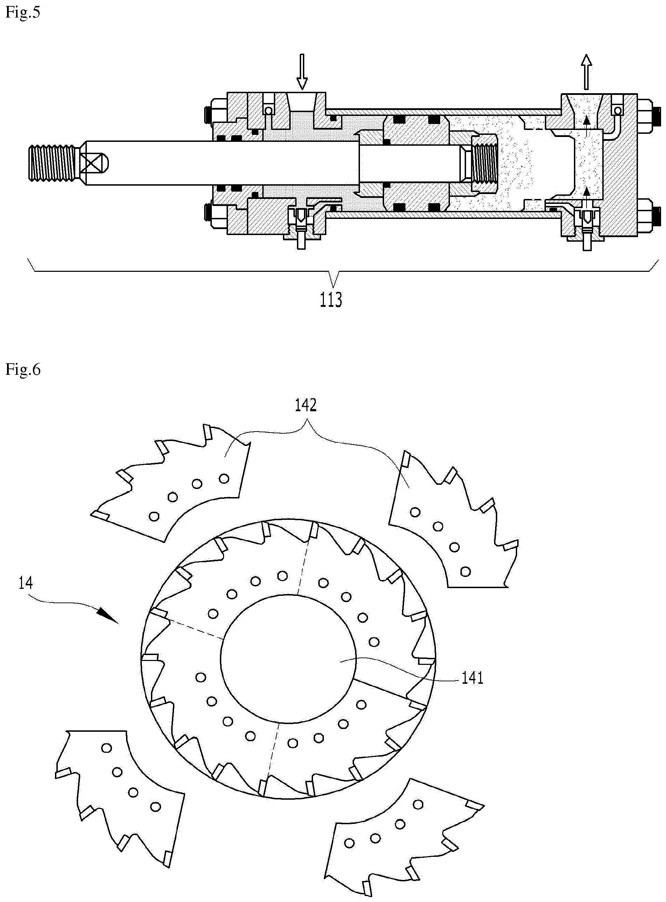

FIG.5 is a perspective view showing a clamp cylinder mounted on the body of the tube cutting device according to the exemplary embodiments.

As shown in FIG.5, the body 11 desirably includes any one of the clamp motor 112 or the clamp cylinder 113 so as to drive the plurality of clamps 13. In this case, the clamp motor 112 includes a rotor, a stator, a ball bearing and a shaft, and the clamp cylinder 113 includes a hydraulic cylinder.

Further, the body 11 includes a plurality of spur gears 114 engaged with the clamp motor 112 to drive the plurality of clamps 13.

In addition, the saw 14 is entirely formed in a doughnut shape and desirably includes the hollow portion 141 formed on the center thereof and the plurality of saw blades 142 segmented with a given size and shape.

The body 11 includes the saw blade driving motor 115 configured to move the plurality of segmented saw blades 142 to the inner peripheral wall of the tube.

In more detail, as shown in FIG.2, the clamp motor 112 or the clamp cylinder 113 is located in the interior of the body 11 to drive the plurality of clamps 13, and the ball screw 111 for driving the saw 14 in forward and backward directions on the horizontal line is disposed on the rear side of the center axis of the rotary body 12.

Further, the body 11 includes the saw blade driving motor 115 configured to drive the plurality of saw blades 142 in such a manner as to be extended from the inside of the tube toward the outside of the tube.

Furthermore, the tube cutting device 1 includes the fitting member 15 configured to move the plurality of segmented saw blades 142 to the inner peripheral wall of the tube.

In more detail, as shown in FIG.2, the clamp motor 112 or the clamp cylinder 113 is located in the interior of the body 11 to drive the plurality of clamps 13.

Further, the body 11 includes the fitting member 15 configured to extend the plurality of saw blades 142 from the inside of the tube toward the outside of the tube.

FIG.6 is a front view showing the saw and the plurality of saw blades disposed on the end of the rotary body of the tube cutting device according to the exemplary embodiments.

Referring to FIG.6, the saw 14 has the hollow portion 141 formed on the center thereof and the four saw blades 142 segmented with the same size.

The plurality of saw blades 142 are extended in every direction according to the forward and backward driving in the horizontal direction of the fitting member 15, thereby making it possible to cut the tube in the direction of the outside of the tube from the inside of the tube.

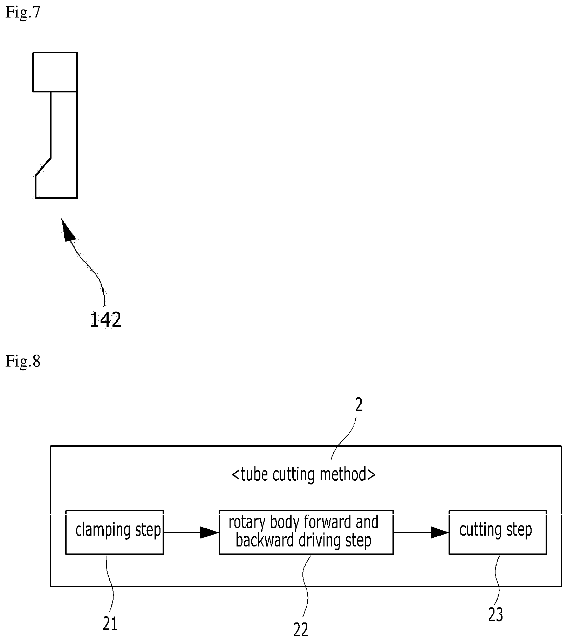

FIG.7 is a side sectional view showing the saw disposed on the end of the rotary body of the tube cutting device according to the exemplary embodiments.

Referring to FIG.7 showing the section of each saw blade 142, in more detail, the saw blade 142 includes a blade portion formed on the upper portion thereof and a support portion formed on the underside of the blade portion to fixedly support the blade portion thereagainst.

In this case, the support portion of each saw blade 142 is desirably concaved to a given depth on one side surface thereof so as to avoid the interference and friction with the cut surface of the tube.

In the process of cutting the tube by means of the plurality of saw blades 142, accordingly, the plurality of saw blades 42 can be accessed to the inner peripheral wall of the tube at a given angle through the tapered angle of the fitting member 15 disposed on the end portions thereof.

So as to prevent the plurality of saw blades 142 accessed to the inner peripheral wall of the tube at the given angle from being damaged or broken, one side surface of the support portion of each saw blade 142 is concaved to the given depth.

Further, the tube cutting device 1 is located in a work place having the danger of radioactive substances, and so as to allow a worker to drive the above-mentioned parts of the tube cutting device 1 from a long distance, accordingly, a controller is desirably mounted in the body 1.

The controller is provided wiredly or wirelessly, and desirably, the worker operates the controller at the outside of the work place.

In addition to the tube cutting device 1 according to the exemplary embodiments, a tube cutting method 2 according to the exemplary embodiments is proposed using the same principle as the above.

FIG.8 is a block diagram showing the tube cutting steps for cutting the tube of the waste steam generator according to the exemplary embodiments.

In more detail, the tube cutting method 2 according to the exemplary embodiments includes the clamping step 21 of fixing the tube-shaped rotary body 12 in such a manner as to be separated from the tube to be cut by a given distance by means of the plurality of clamps 13 disposed along the outer peripheral surface of the body side end portion of the rotary body 12, the rotary body forward/backward driving step 22 of linearly driving the rotary body 12 on the horizontal axis in the interior of the tube to be cut by means of the ball screw 111, and the cutting step 23 of moving the plurality of saw blades 142 of the saw 14 to the inner peripheral wall of the tube to cut the tube.

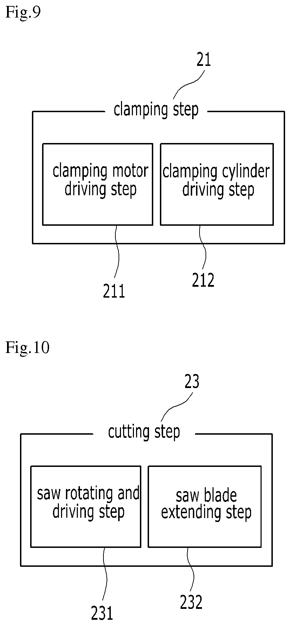

FIG.9 is a block diagram showing the clamping step in the tube cutting steps for cutting the tube of the waste steam generator according to the exemplary embodiments.

FIG. 10 is a block diagram showing the cutting step in the tube cutting steps for cutting the tube of the waste steam generator according to the exemplary embodiments.

As shown in FIG.9, the clamping step 21 includes any one of the clamping motor driving step 211 of fixing the plurality of clamps 13 to the rotary body 12 in such a manner as to be separated from the tube to be cut by the given distance by means of the clamp motor 112 and the plurality of spur gears 114 and the clamp cylinder driving step 212 of fixing the plurality of clamps 13 to the rotary body 12 in such a manner as to be separated from the tube to be cut by the given distance by means of the clamp cylinder 113.

As shown in FIG.10, further, the cutting step 23 includes the saw rotating and driving step 231 of rotating the saw 14 in a given direction, while having the same center axis as the rotary body 12, and the saw blade extending step 232 of moving the plurality of saw blades 142 constituting the saw 14 toward the inner peripheral wall of the tube.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

## Claims

1. A tube cutting device for cutting a tube of a waste steam generator, the tube cutting device comprising:
a body (11) configured to transmit power;
a tube-shaped rotary body (12) provided on a side surface of the body (11) and having a horizontal rotary shaft configured to rotate with the power supplied from the body (11);
a plurality of clamps (13) provided along an outer peripheral surface of a first side end portion of the rotary body (12) and configured to fix the rotary body (12) to the tube to be cut;
a saw (14) provided on opposite second end portion opposite to the first side end portion of the rotary body (12) and configured to rotate together with the rotary body (12) to cut the tube, wherein the saw (14) is formed in a doughnut shape and comprises a hollow portion (141) formed on a center portion thereof and a plurality of saw blades (142) forming the saw; and
a fitting member (15) having a conical shape and disposed on an opposite side to a side of the saw (14) facing the body (11), and wherein a peak portion (151) of the fitting member (15) is configured to be inserted into the hollow portion (141) formed on the center portion of the saw (14); and
wherein the body (11) comprises:
a ball screw (111) configured to drive the fitting member (15) forwardly and backwardly along a horizontal line toward and from the hollow portion (141) of the saw (14) to move the plurality of the saw blades in a direction of an outside of the tube from an inside of the tube, and
a saw blade driving motor (115) configured to move the plurality of saw blades (142) toward an inner peripheral wall of the tube.

2. The tube cutting device according to claim 1, wherein the body (11) comprises a ball screw (111) configured to linearly drive the rotary body (12) on a horizontal axis of the rotary body.

3. The tube cutting device according to claim 1 or 2, wherein the body (11) comprises a clamp motor (112) configured to drive the plurality of clamps (13), wherein the clamp motor (112) comprises:
a motor rotary body;
a stator;
a ball bearing; and
a motor shaft and a clamp cylinder (113) configured to drive the plurality of clamps (13), and
wherein the clamp cylinder (113) includes a hydraulic cylinder.

4. The tube cutting device according to claim 3, wherein the body (11) further comprises a plurality of spur gears (114) engaged with the clamp motor and configured to drive the plurality of clamps (13).

5. The tube cutting device according to any one of claims 1 to 4, further comprising a controller configured to wiredly or wirelessly control the driving of the rotary body (12), the plurality of clamps (13) and the saw (14).

6. A tube cutting method for cutting a tube of a waste steam generator using the tube cutting device of claim 1, the tube cutting method comprising:
a clamping step (21) of fixing the tube-shaped rotary body (12) in such a manner as to be separated from the tube to be cut by a given distance by means of the plurality of clamps (13) disposed along the outer peripheral surface of the body side end portion of the rotary body (12);
a rotary body forward/backward driving step (22) of linearly driving the rotary body (12) on the horizontal axis in the interior of the tube to be cut by means of a ball screw (111); and
a cutting step (23) of moving a plurality of saw blades of the saw to the inner peripheral wall of the tube to cut the tube.

7. The tube cutting method according to claim 6, wherein the clamping step (21) comprises at least one of a clamping motor driving step (211) of fixing the plurality of clamps (13) to the rotary body (12) in such a manner as to be separated from the tube to be cut by the given distance by means of a clamp motor (112) and a plurality of spur gears (114), and a clamp cylinder driving step (212) of fixing the plurality of clamps (13) to the rotary body (12) in such a manner as to be separated from the tube to be cut by the given distance by means of a clamp cylinder (113).

8. The tube cutting method according to claim 6 or 7, wherein the cutting step (23) comprises:
a saw rotating and driving step (231) of rotating the saw (14) in a given direction, while having the same center axis as the rotary body (12); and
a saw blade extending step (232) of moving the plurality of saw blades (142) of the saw (14) toward the inner peripheral wall of the tube.

## Patentansprüche

1. Rohrschneidevorrichtung zum Schneiden eines Rohrs eines Abdampfgenerators, wobei die Rohrschneidevorrichtung Folgendes umfasst:
einen Körper (11), der konfiguriert ist, Leistung zu übertragen;
einen rohrförmigen Drehkörper (12), der an einer Seitenfläche des Körpers (11) vorgesehen ist und eine horizontale Drehwelle aufweist, die konfiguriert ist, sich mit der Leistung, die von dem Körper (11) zugeführt worden ist, zu drehen;
mehrere Klemmvorrichtungen (13), die entlang einer Außenumfangsfläche eines ersten seitlichen Endabschnitts des Drehkörpers (12) vorgesehen sind und konfiguriert sind, den Drehkörper (12) an dem Rohr, das geschnitten werden soll, zu befestigen;
eine Säge (14), die an einem gegenüberliegenden zweiten Endabschnitt, der dem ersten seitlichen Endabschnitt des Drehkörpers (12) gegenüberliegt, vorgesehen ist und konfiguriert ist, sich zusammen mit dem Drehkörper (12) zu drehen, um das Rohr zu schneiden, wobei die Säge (14) torusförmig ausgebildet ist und einen hohlen Abschnitt (141), der in einem mittleren Abschnitt davon gebildet ist, und mehrere Sägeblätter (142), die die Säge bilden, umfasst; und
ein Passelement (15), das eine konische Form aufweist und an einer Seite angeordnet ist, die einer Seite der Säge (14), die dem Körper (11) zugewandt ist, gegenüberliegt, wobei eine Spitzenabschnitt (151) des Passelements (15) konfiguriert ist, in den hohlen Abschnitt (141), der in dem mittleren Abschnitt der Säge (14) gebildet ist, eingesetzt zu werden; und
wobei der Körper (11) Folgendes umfasst:
ein Kugelgewindetrieb (111), der konfiguriert ist, das Passelement (15) vorwärts und rückwärts entlang einer horizontalen Linie in Richtung des hohlen Abschnitts (141) der Säge und von diesem weg zu treiben, um die mehreren Sägeblätter von einer Innenseite des Rohrs in Richtung einer Außenseite des Rohrs zu bewegen, und
einen Sägeblatt-Antriebsmotor (115), der konfiguriert ist, die mehreren Sägeblätter (142) zu einer Innenumfangswand des Rohrs zu bewegen.

2. Rohrschneidevorrichtung nach Anspruch 1, wobei der Körper (11) einen Kugelgewindetrieb (111) umfasst, der konfiguriert ist, den Drehkörper (12) auf einer horizontalen Achse des Drehkörpers linear anzutreiben.

3. Rohrschneidevorrichtung nach Anspruch 1 oder 2, wobei der Körper (11) einen Klemmvorrichtungsmotor (112) umfasst, der konfiguriert ist, die mehreren Klemmvorrichtungen (13) anzutreiben, wobei der Klemmvorrichtungsmotor (112) Folgendes umfasst:
einen Motordrehkörper;
einen Stator;
ein Kugellager; und
eine Motorwelle und einen Klemmvorrichtungszylinder (113), der konfiguriert ist, die mehreren Klemmvorrichtungen (13) anzutreiben, und
wobei der Klemmvorrichtungszylinder (113) einen Hydraulikzylinder enthält.

4. Rohrschneidevorrichtung nach Anspruch 3, wobei der Körper (11) ferner mehrere Stirnräder (114) umfasst, die mit dem Klemmvorrichtungsmotor in Eingriff sind und konfiguriert sind, die mehreren Klemmvorrichtungen (13) anzutreiben.

5. Rohrschneidevorrichtung nach einem der Ansprüche 1 bis 4, die ferner eine Steuereinrichtung umfasst, die konfiguriert ist, das Antreiben des Drehkörpers (12), der mehreren Klemmvorrichtungen (13) und der Säge (14) drahtgebunden oder drahtlos zu steuern.

6. Rohrschneideverfahren zum Schneiden eines Rohrs eines Abdampfgenerators unter Verwendung der Rohrschneidevorrichtung nach Anspruch 1, wobei das Rohrschneideverfahren Folgendes umfasst:
einen Klemmschritt (21) des Befestigens des rohrförmigen Drehkörpers (12) in der Art, dass er mittels der mehreren Klemmvorrichtungen (13), die entlang der Außenumfangsfläche des körperseitiger Endabschnitts des Drehkörpers (12) angeordnet sind, von dem zu schneidenden Rohr durch eine vorgegebene Entfernung getrennt ist;
einen Drehkörper-Vorwärts/Rückwärts-Antriebsschritt (22) des linearen Antreibens des Drehkörpers (12) auf der horizontalen Achse im Inneren des zu schneidenden Rohrs mittels eines Kugelgewindetriebs (111); und
einen Schneideschritt (23) des Bewegens mehrerer Sägeblätter der Säge zu der Innenumfangswand des Rohrs, um das Rohr zu schneiden.

7. Rohrschneideverfahren nach Anspruch 6, wobei der Klemmschritt (21) Folgendes umfasst: einen Schritt (211) zum Antreiben des Klemmvorrichtungsmotors des Befestigens der mehreren Klemmvorrichtungen (13) an dem Drehkörper (12) derart, dass er von dem zu schneidenden Rohr um die vorgegebene Entfernung mittels eines Klemmvorrichtungsmotors (112) und mehrerer Stirnräder (114) getrennt wird, und/oder einen Schritt (212) zum Antreiben des Klemmvorrichtungszylinders zum Befestigen der mehreren Klemmvorrichtungen (13) an dem Drehkörper (12) derart, dass er von dem zu schneidenden Rohr um die vorgegebene Entfernung mittels eines Klemmvorrichtungszylinders (113) getrennt wird.

8. Rohrschneideverfahren nach Anspruch 6 oder 7, wobei der Schneideschritt (23) Folgendes umfasst:
einen Schritt (231) der Drehens und Antreibens der Säge zum Drehen der Säge (14) in eine vorgegebene Richtung, während sie dieselbe Mittelachse aufweist, wie der Drehkörper (12); und
einen Schritt (232) des Ausfahrens der Sägeblätter zum Bewegen der mehreren Sägeblätter (142) der Säge (14) zu der Innenumfangswand des Rohrs.

## Revendications

1. Dispositif de coupe de tube pour couper un tube d'un générateur de vapeur à récupération de chaleur, le dispositif de coupe de tube comportant :
un corps (11) configuré pour transmettre de la puissance ;
un corps rotatif en forme de tube (12) agencé sur une surface latérale du corps (11) et ayant un arbre rotatif horizontal configuré pour tourner avec la puissance fournie à partir du corps (11) ;
une pluralité de pinces (13) agencées le long d'une surface périphérique extérieure d'une première partie d'extrémité latérale du corps rotatif (12) et configurées pour fixer le corps rotatif (12) sur le tube à couper ;
une scie (14) agencée sur une seconde partie d'extrémité opposée, opposée à la première partie d'extrémité latérale du corps rotatif (12) et configurée pour tourner en association avec le corps rotatif (12) pour couper le tube, dans lequel la scie (14) est formée en forme d'anneau et comporte une partie creuse (141) formée sur une partie centrale de celle-ci et une pluralité de lames de scie (142) formant la scie ; et
un élément de montage (15) ayant une forme conique et disposé sur un côté opposé à un côté de la scie (14) dirigé vers le corps (11), et dans lequel une partie de pic (151) de l'élément de montage (15) est configurée pour être insérée dans la partie creuse (141) formée sur la partie centrale de la scie (14) ; et
dans lequel le corps (11) comporte :
une vis à billes (111) configurée pour entraîner l'élément de montage (15) vers l'avant et vers l'arrière le long d'une ligne horizontale vers et depuis la partie creuse (141) de la scie (14) pour déplacer la pluralité de lames de scie dans une direction allant d'un extérieur du tube à un intérieur du tube, et
un moteur d'entraînement de lames de scie (115) configuré pour déplacer la pluralité de lames de scie (142) vers une paroi périphérique intérieure du tube.

2. Dispositif de coupe de tube selon la revendication 1, dans lequel le corps (11) comporte une vis à billes (111) configurée pour entraîner linéairement le corps rotatif (12) sur un axe horizontal du corps rotatif.

3. Dispositif de coupe de tube selon la revendication 1 ou 2, dans lequel le corps (11) comporte un moteur de pinces (112) configuré pour entraîner la pluralité de pinces (13), dans lequel le moteur de pinces (112) comporte :
un corps rotatif de moteur ;
un stator ;
un roulement à billes ; et
un arbre de moteur et un vérin de pinces (113) configuré pour entraîner la pluralité de pinces (13), et
dans lequel le vérin de pinces (113) inclut un vérin hydraulique.

4. Dispositif de coupe de tube selon la revendication 3, dans lequel le corps (11) comporte en outre une pluralité de roues droites cylindriques (114) en prise avec le moteur de pinces et configurés pour entraîner la pluralité de pinces (13).

5. Dispositif de coupe de tube selon l'une quelconque des revendications 1 à 4, comportant en outre une commande configurée pour commander de manière filaire ou sans fil l'entraînement du corps rotatif (12), la pluralité de pinces (13) et la scie (14).

6. Procédé de coupe de tube pour couper un tube d'un générateur de vapeur à récupération de chaleur en utilisant le dispositif de coupe de tube de la revendication 1, le procédé de coupe de tube comportant :
une étape de serrage (21) consistant à fixer le corps rotatif en forme de tube (12) d'une manière telle qu'il est séparé du tube à couper par une distance donnée au moyen de la pluralité de pinces (13) disposées le long de la surface périphérique extérieure de la partie d'extrémité latérale de corps du corps rotatif (12) ;
une étape d'entraînement vers l'avant/arrière de corps rotatif (22) consistant à entraîner linéairement le corps rotatif (12) sur l'axe horizontal dans l'intérieur du tube à couper au moyen d'une vis à billes (111) ; et
une étape de coupe (23) consistant à déplacer une pluralité de lames de scie de la scie jusqu'à la paroi périphérique intérieure du tube pour couper le tube.

7. Procédé de coupe de tube selon la revendication 6, dans lequel l'étape de serrage (21) comporte au moins une étape parmi une étape d'entraînement de moteur de pinces (211) consistant à fixer la pluralité de pinces (13) sur le corps rotatif (12) d'une manière telle qu'elles sont séparées du tube à couper par la distance donnée au moyen d'un moteur de pinces (112) et d'une pluralité de roues droites cylindriques (114), et une étape d'entraînement de vérin de pinces (212) consistant à fixer la pluralité de pinces (13) sur le corps rotatif (12) d'une manière telle qu'elles sont séparées du tube à couper par la distance donnée au moyen d'un vérin de pinces (113).

8. Procédé de coupe de tube selon la revendication 6 ou 7, dans lequel l'étape de coupe (23) comporte :
une étape de rotation et d'entraînement de scie (231) consistant à faire tourner la scie (14) dans un sens donné, tout en ayant le même axe central que le corps rotatif (12) ; et une étape d'extension de lames de scie (115) consistant à déplacer la pluralité de lames de scie (142) de la scie (14) vers la paroi périphérique intérieure du tube.
